# EUROPEAN PATENT SPECIFICATION

(11) **EP 3 098 796 B1**
(45) Date of publication and mention of the grant of the patent: **23.01.2019**
(21) Application number: 16163452.2
(22) Date of filing: 31.03.2016
(51) Int. Cl.: G08C 17/00

(54) **REMOTE CONTROL APPARATUS, METHOD OF PROVIDING VIBRATION FEEDBACK THEREOF, AND DISPLAY SYSTEM**
FERNSTEUERUNGSVORRICHTUNG, VERFAHREN ZUR BEREITSTELLUNG VON VIBRATIONSRÜCKKOPPELUNG DAVON UND ANZEIGESYSTEM
APPAREIL DE COMMANDE À DISTANCE, PROCÉDÉ DE FOURNITURE DE RÉTROACTION DE VIBRATIONS DE CELUI-CI ET SYSTÈME D'AFFICHAGE

(30) Priority: 29.05.2015 KR 20150075874
(43) Date of publication of application: 30.11.2016
(73) Proprietor: Samsung Electronics Co., Ltd., Gyeonggi-do 16677 (KR)
(72) Inventor: KWON, Sung-hyuk, Gyeonggi-do (KR); NOH, Chang-soo, Gyeonggi-do (KR); NA, Moon-sung, Gyeonggi-do (KR); MOON, Jong-bo, Gyeonggi-do (KR); LEE, Dong-hun, Gyeonggi-do (KR); CHOI, Won-min, Seoul (KR); CHOI, Jeong-hye, Seoul (KR)
(74) Representative: Hewett, Jonathan Michael Richard

(56) References cited:
- EP-A1- 3 070 590
- EP-A2- 2 779 672
- KR-A- 20150 025 721
- US-A1- 2006 136 630
- US-A1- 2009 284 468
- US-A1- 2011 156 862
- US-A1- 2012 249 323

## Description

The present invention relates to a remote control apparatus, a method of providing a vibration feedback thereof, and a display system, and more particularly, to a remote control apparatus that provides vibrations to a user according to a context in order to reinforce a feedback effect and a notification function, a method of providing a vibration feedback thereof, and a display system.

Various types of electronic devices have been distributed to users, and remote control apparatuses for controlling electronic devices have been also provided. An existing remote control apparatus focuses on controlling of various functions of an electronic device. However, there is an increasing need for methods of reducing manipulations when a user manipulates an electronic device, such as a TV or the like, through a remote control apparatus.

When providing a feedback to a user, there is used an existing method of providing an auditory or visual feedback from an electronic device that is an object to be controlled. Therefore, there is no feedback that may be directly acquired by a user who is in a long distance.

Also, when considering that a minute manipulation using a remote control apparatus is increasing, an additional feedback on a manipulation may not be provided to a user, and thus a reliability of a usability decreases.

EP2779672 discloses outputting a haptic effect in response an event associated with video content displayed by a television device.

KR1020150025721 discloses a remote controller including an haptic actuator for providing a haptic feedback.

US20090284468 discloses a remote control handset 10 for navigating a user interface of an entertainment device, the user interface having a hierarchical menu structure.

US20110156862 discloses techniques for locating a lost remote control by transmitting a message from the controlled device to the remote control.

US20060136630 discloses methods and systems for providing customized "haptic messaging" to users of handheld communication devices. According to the invention a remote control apparatus and a method according to the independent claims are provided. Favourable embodiments are defined in the dependent claims. Embodiments of the present invention provide a remote control apparatus that provides a clear manipulation to a user through vibrations that the user feels through buttons and functions of the remote control apparatus and provides auditory, visual, and vibration feedbacks to the user so as to reinforce a feedback effect and a notification function, a method of providing a vibration thereof, and a display system.

According to an aspect of the present disclosure, a remote control apparatus includes an input unit configured to receive a user input, a communicator configured to perform transmissions and receptions with an external apparatus that is an object to be controlled, a vibrator configured to generate vibrations, and a controller configured to, in response to a signal for notifying that a preset operation is performed, being received from the external apparatus through the communicator, control the vibrator to generate vibrations.

The controller may control the communicator to transmit a user input, which is to change a selected item of a list displayed on the external apparatus into an item adjacent to a currently selected item, to the external apparatus and, in response to a signal for notifying that a first or last item of the displayed list is selected, being received through the communicator, control the vibrator to generate vibrations.

The controller may control the communicator to transmit a user input, which is to move a pointer displayed on the external apparatus, to the external apparatus and, in response to a signal for notifying that the cursor is moved into an area of a rollover item displayed on the external apparatus, being received through the communicator, control the vibrator to generate vibrations.

In response to a signal for notifying that the cursor is moved into the area of the rollover item and moved onto a first or last item of the rollover item through an auto rollover scroll so as to stop scrolling, being received through the communicator, the controller may control the vibrator to generate vibrations.

According to the invention, the controller controls the communicator to transmit a user input, which is to change a selected item of a list having a plurality of categories displayed on the external apparatus, to the external apparatus and, in response to a signal for notifying that a category of an item selected from items of the list before being changed is different from a category of an item selected from the items of the list after being changed, being received through the communicator, control the vibrator to generate vibrations.

In response to a signal for notifying that a pop-up window showing a notification message is displayed on the external apparatus, being received through the communicator, the controller may control the vibrator to display the pop-up window and simultaneously generate vibrations.

The remote control apparatus may further include a storage unit configured to store a plurality of vibration patterns respectively corresponding to the preset operation. The controller may control the vibrator to generate vibrations in a pattern corresponding to the received preset operation among the plurality of vibration patterns according to the received preset operation.

The remote control apparatus may further include a power supply unit configured to supply power to the remote control apparatus. In response to the power of the power supply unit being lower than or equal to a preset level, the controller may control the communicator to transmit a control command for displaying a notification message on the external apparatus and control the vibrator to generate vibrations.

The controller may control the vibrator to generate vibrations in response to a signal for notifying that a user input for finding the remote control apparatus is input into the external apparatus, being received through the communicator and control the vibrator to stop the vibrations in response to a preset time elapsing or a user input being input into the input unit after generating the vibrations.

In response to a touch input of a user being input into the input unit, the controller may control the vibrator to generate vibrations regardless of a power state of the external apparatus that is the object to be controlled.

According to another aspect of the present disclosure, a method of providing a vibration feedback of a remote control apparatus, includes receiving a signal for notifying that a presert operation is performed in an external apparatus that is an object to be controlled, and generating vibrations in response to the received signal.

The method may further include transmitting a user input, which is to change a selected item of a list displayed on the external apparatus into an item adjacent to a currently selected item, to the external apparatus. In response to a signal for notifying that a first or last item of the displayed list is selected, being received, the vibrations may be generated.

The method may further include transmitting a user input for moving a cursor displayed on the external apparatus to the external apparatus. In response to a signal for notifying that the cursor is moved into an area of a rollover item displayed on the external apparatus, being received, the vibrations may be generated.

In response to a signal for notifying that the cursor is moved into the area of the rollover item and moved onto a first or last item of the rollover item through an auto rollover scroll so as to stop scrolling, being received, the vibrations may be repeatedly generated.

The method further includes transmitting a user input, which is to change a selected item of a list having a plurality of categories displayed on the external apparatus, to the external apparatus. In response to a signal for notifying that a category of an item selected from items of the list before being changed is different from a category of an item selected from the items of the list after being changed, being received, the vibrations may be generated.

In response to a signal for notifying that a pop-up window showing a notification message is displayed on the external apparatus, being received, the pop-up window may be displayed and simutaneously, the vibrations may be generated.

The method may further include storing a plurality of vibration patterns respectively corresponding to the preset operation. The vibrations may be generated in a pattern corresponding to the received preset operation among the plurality of vibration patterns according to the received preset operation.

In response to power of the remote control apparatus being lower than or equal to a preset level, a control command for displaying a notification message on the external apparatus may be transmitted, and the vibrations may be generated.

The generating of the vibrations may include, in response to a signal for notifying that a user command for finding the remote control apparatus, being input into the external apparatus, generating vibrations, and in response to a preset time elapsing or a user input being input into the remote control apparatus after generating the vibrations, stopping the vibrations.

According to another aspect of the present disclosure, a display system includes a remote control apparatus configured to receive a user manipulation command, and a display apparatus configured to operate in response to a user manipulation command input into the remote control apparatus and, in response to a preset operation being performed, transmit a signal for notifying that the preset operation is performed in the external apparatus. In response to a signal for notifying that the preset operation is performed, being received, the remote control apparatus may generate vibrations.

According to various exemplary embodiments of the present disclosure as described above, when using a remote control apparatus, a reliability of a control may increase for a user. Also, the user may receive a feedback on a signal input into a display apparatus through visual and auditory information and vibrations and thus acquire a multi-sensuous experience.

Additional and/or other aspects and advantages of the disclosure will be set forth in part in the description which follows and, in part, will be obvious from the description, or may be learned by practice of the disclosure.

The above and/or other aspects of the present disclosure will be more apparent by describing certain exemplary embodiments of the present disclosure with reference to the accompanying drawings, in which:
FIG. 1 illustrates a display system according to an exemplary embodiment of the present invention;
FIG. 2 is a schematic block diagram of a structure of a remote control apparatus according to an exemplary embodiment of the present invention;
FIG. 3 is a detailed block diagram of a structure of a remote control apparatus according to an exemplary embodiment of the present invention;
FIGS. 4A and 4B illustrate vibrations that are provided when a physical button of a remote control apparatus is long pressed, according to an exemplary embodiment of the present invention;
FIGS. 5A and 5B illustrate vibrations that are provided when a touchpad of an input unit of a remote control apparatus is touched, according to an exemplary embodiment of the present invention;
FIG. 6 illustrates vibrations that are provided when an item is changed into an item having a different category in a remote control apparatus, according to an exemplary embodiment of the present invention;
FIG. 7 illustrates vibrations that are provide when a cursor reaches an end of a list in a remote control apparatus, according to an exemplary embodiment of the present invention;
FIG. 8 illustrates vibrations that are provided when a cursor is positioned in an area of a rollover item in a remote control apparatus, according to an exemplary embodiment of the present invention;
FIG. 9 illustrates vibrations that are provided when an automatic rollover scroll is performed in a remote control apparatus, according to an exemplary embodiment of the present invention;
FIG. 10 illustrates vibrations that are provided when an item is moved in a remote control apparatus, according to an exemplary embodiment of the present invention;
FIGS. 11A, 11B, 11C and 11D illustrate vibrations that are provided simultaneously when a notification message is generated in a remote control apparatus, according to an exemplary embodiment of the present invention;
FIG. 12 illustrates vibrations that are provided when a remote control apparatus is lost or does not exist, according to an exemplary embodiment of the present invention;
FIG. 13 illustrates vibrations that are provided when power of a remote control apparatus is lower than or equal to a preset level, according to an exemplary embodiment of the present invention;
FIG. 14 illustrates vibrations that are provided when a remote control apparatus enters a particular user interface (UI), according to an exemplary embodiment of the present invention; and
FIGS. 15, 16 and 17 are flowcharts of methods of providing vibrations of a remote control apparatus, according to various exemplary embodiments of the present invention.

The exemplary embodiments of the present invention may be diversely modified. Accordingly, specific exemplary embodiments are illustrated in the drawings and are described in detail in the detailed description. However, it is to be understood that the present invention is not limited to a specific exemplary embodiment, but includes all modifications, equivalents, and substitutions without departing from the scope of the claims. Also, well-known functions or constructions are not described in detail since they would obscure the disclosure with unnecessary detail.

The terms "first", "second", etc. may be used to describe diverse components, but the components are not limited by the terms. The terms are only used to distinguish one component from the others.

The terms used in the present application are only used to describe the exemplary embodiments, but are not intended to limit the scope of the invention. In the exemplary embodiment of the present invention, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

Hereinafter, the present invention will be described in detail with reference to the accompanying drawings.

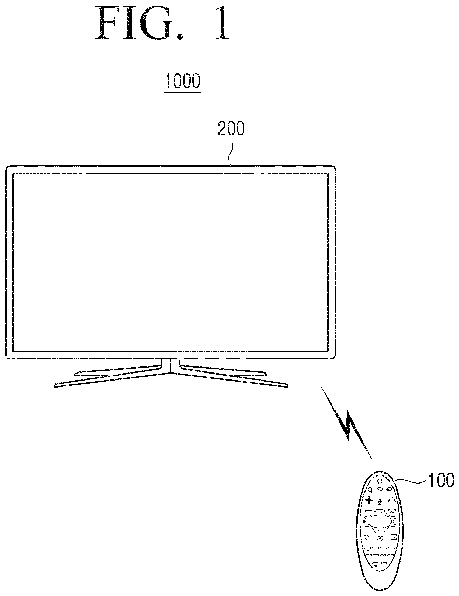

FIG. 1 illustrates a display system 1000 according to an exemplary embodiment of the present invention. Referring to FIG. 1, the display system 1000 includes a remote control apparatus 100 and an external apparatus 200 such as a display apparatus 200.

The remote control apparatus 100 performs a function of receiving a user input such as a user manipulation command. Also, when the remote control apparatus 100 receives a signal for notifying that a preset operation is performed, from the display apparatus 200, the remote control apparatus 100 provides a vibration feedback. The vibration feedback may be expressed as a Haptic feedback.

The display apparatus 200 operates so as to respond to the user manipulation command input into the remote control apparatus 100. For example, the display apparatus 200 may display user interface (UI) elements according to the user manipulation command input into the remote control apparatus 100. The display apparatus 200 may also control the displayed UI elements to move. When the preset operation is performed, the display apparatus 200 transmits the signal for notifying that the preset operation is performed, to the remote control apparatus 100. The signal may be a control command for generating a vibration feedback.

The display apparatus 200 may be paired with an external electronic device. In this case, when the paired external electronic device generates notification information, the vibration feedback may be realized to be generated from the remote control apparatus 100 through the display apparatus 200.

Through the display system 1000 as described above, a user may acquire visual and auditory information from the display apparatus 200 and haptic information from the remote control apparatus 100. The display system 1000 may enable the user to experience a multi-sensuous interaction so as to increase a feedback effect of the notification information.

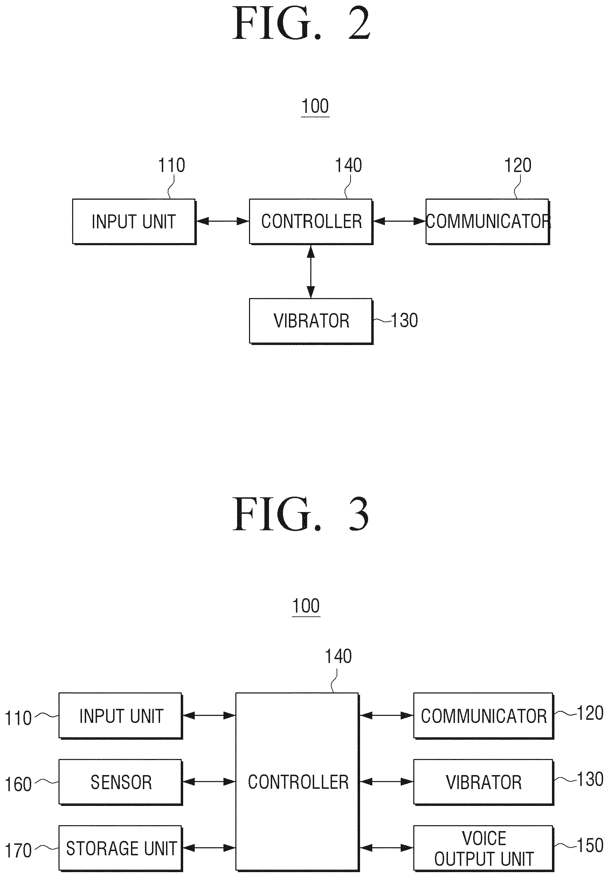

FIG. 2 is a block diagram of a schematic structure of a remote control apparatus 100, according to an exemplary embodiment of the present invention. Referring to FIG. 2, the remote control apparatus 100 includes an input unit 110, a communicator 120, a vibrator 130, and a controller 140.

Hereinafter, the remote control apparatus 100 will be mainly described as being realized as a smart remote controller. The remote control apparatus 100 may be realized as various types such as a button type small control apparatus, a user-defined type remote controller, a pointing device, a mobile device such as a smartphone, etc. but is not limited thereto. Also, an external apparatus 200 that is an object to be controlled by the remote control apparatus 100 will be described as a smart TV. However, all types of electronic apparatuses that are controllable by the remote control apparatus 100 may be the external apparatus 200 that is the object controlled by the remote control apparatus 100 according to an exemplary embodiment of the present invention. For example, the external apparatus 200 may be a display apparatus, an audio apparatus, a hub of a home network, or the like.

The input unit 110 performs a function of receiving a user command. The input unit 110 may be realized as a button, a touchpad, an application, a keypad, or the like. The same button may be pressed according to various methods so as to enable the input unit 110 to receive different user commands.

The communicator 120 performs transmissions and receptions with the external apparatus 200 that is the object to be controlled. The communicator 120 may be formed as a wireless communication module to perform a wireless communication function with the external apparatus 200. For example, the communicator 120 may transmit a control command for moving a pointer or indicator such as a cursor displayed on the external apparatus 200. As another example, when a system of the external apparatus 200 generates a notification message, the communicator 120 receives information about the generation of the notification message from the external apparatus 200.

The vibrator 130 generates vibrations that a user may feel through a tactile sensibility. The vibrator 130 may change a strength or a pattern to generate the vibrations. The vibrator 130 may be formed to generate the vibrations in a whole part of the remote control apparatus 100 or may be formed to generate the vibrations only in a part (e.g., a finger part) where the user may feel the vibrations well. For example, the vibrator 130 may be realized to generate the vibrations only in a touchpad part of the remote control apparatus 100.

The controller 140 controls all elements of the remote control apparatus 100. The controller 140 may include a central processing unit (CPU), and a read only memory (ROM) and a random access memory (RAM) that store a module and data for controlling the remote control apparatus 100. As another example, the controller 140 may be realized by using a micro controller unit (MCU) to be made small.

According to an exemplary embodiment of the present invention, when the signal for notifying the preset operation is performed is received from the external apparatus 200 through the communicator 120, the controller 140 controls the vibrator 130 to generate vibrations in response to the received signal. As another example, when a preset user input is received through the input unit 110 regardless of the external apparatus 200, the controller 140 controls the vibrator 130 to generate vibrations.

The controller 140 may control the communicator 120 to transmit a command, which is to move or change UI elements displayed on the external apparatus 200, to the external apparatus 200.

According to an exemplary embodiment of the present invention, the controller 140 may control the communicator 120 to transmit a user input, which is to change a selected item of a list displayed on the external apparatus 200 into an item adjacent to a currently selected item, to the external apparatus 200. A visual effect for distinguishing the selected item of the list from other items such as highlighting may be given to the selected item of the list. When a first or last item is selected from the list when a pointer, an indicator or a cursor moves on items of the list, a signal for notifying that the preset operation is performed may be received from the external apparatus 200. When a signal for notifying that the first or last item of the displayed list is selected is received through the communicator 120, the controller 140 may control the vibrator 130 to generate vibrations.

According to another exemplary embodiment of the present invention, the controller 140 may control the communicator 120 to transmit a user input, which is to move a pointer or an indicator such as a cursor displayed on the external apparatus 200, to the external apparatus 200. When the cursor is moved into an area of a rollover item displayed on the external apparatus 200, the signal for notifying that the preset operation is performed may be received. The rollover item refers to an item that is changed into another shape or image when a pointer such as a cursor comes up. For example, when the cursor is moved into the area of the rollover item, a highlight effect may occur outside the rollover item. When a signal for notifying that the cursor is moved into the area of the rollover item displayed on the external apparatus 200 is received through the communicator 120, the controller 140 may control the vibrator 140 to generate vibrations.

After the cursor is moved into the area of the rollover item, the cursor may be moved onto a first or last item of the rollover item to stop scrolling through an auto rollover scroll. When a signal for notifying that scrolling stops is received through the communicator 120, the controller 140 may control the vibrator 130 to generate vibrations.

According to an exemplary embodiment of the present invention, the controller 140 may control the communicator 120 to transmit a user input, which is to change a selected item of a list having a plurality of categories displayed on the external apparatus 200, to the external apparatus 200. Also, when a signal, which is to notify that a category of an item selected from items of the list before being changed is different from a category of an item selected from the items of the list after being changed, is received through the communicator 120, the controller 140 may control the vibrator 130 to generate vibrations.

According to another exemplary embodiment of the present invention, when a signal for notifying that a pop-up window showing a notification message is displayed on the external apparatus 200 is received through the communicator 120, the controller 140 may control the vibrator 130 to display the pop-up window and simultaneously generate vibrations. For example, the pop-up window may be displayed when a notification message related to the system of the external apparatus 200 is generated, when a notification message is generated in an application of a set 3rd party, and when a notification message is generated in another electronic device that operates with the external apparatus 200.

According to an exemplary embodiment of the present invention, when a signal for notifying that a user command for finding the remote control apparatus 100 is input is received through the communicator 120, the controller 140 may control the vibrator 130 to generate vibrations. This is to generate vibrations from the remote control apparatus 100 so as to enable the user to easily find the remote control apparatus 100 when the user fails to find where the remote control apparatus 100 is located. For example, a voice output may be provided together with vibrations. When a preset time elapses or a user input is received through the input unit 110 after generating vibrations, the controller 140 may control the vibrator 130 to stop generating vibrations.

According to another exemplary embodiment of the present invention, when a touch input of the user is received through the input unit 110, the controller 140 may control the vibrator 130 to generate vibrations regardless of a power state of the external apparatus 200. This is to inform the user that the remote control apparatus 100 is touched. Therefore, the controller 140 controls the vibrator 130 to generate vibrations regardless of the power state of the external apparatus 200, an operation of displaying a pointer or indicator such as a cursor on the external apparatus 200, or the like.

Through the remote control apparatus 100 as described above, a possibility that the user may not feel a feedback on notification information provided by the external apparatus 200 may be reduced. Therefore, a convenience of the user who misses the notification information may be reduced.

FIG. 3 is a block diagram of a detailed structure of a remote control apparatus 100, according to an exemplary embodiment of the present invention. Referring to FIG. 3, the remote control apparatus 100 includes an input unit 110, a communicator 120, a vibrator 130, a controller 140, a voice output unit 150, a sensor 160, and a storage unit 170. The remote control apparatus 100 may additionally include elements such as a power supply unit (not shown), etc. that are not shown.

The input unit 110 performs a function of receiving a user command. For example, examples of the input unit 110 may include a button unit including 4-way keys, a touchpad capable of receiving a touch input, etc. The input unit 110 may be realized as a 4-way type, a 2-way key type, a single button type, or the like. The input unit 110 may use different input methods to receive several types of commands. For example, when an operation of pressing the input unit 110 for a preset time or more is maintained like a long press, a particular function may be set to be executed. An input using a touchpad is easy to intuitively move a pointer such as a cursor or the like. Besides an input method using a physical key, the input unit 110 may be realized to include a microphone or the like so as to receive a voice input.

The communicator 120 communicates with the external apparatus 200 according to various types of communication methods. The communicator 120 may transmit an infrared (IR) signal to the external apparatus 200. Since the IR signal is a one-way communication, the communicator 120 may include various types of communication chips or modules that support wireless communicators, for two-way communications. For example, the communicator 120 may include chips that operate according to local area network (LAN), WiFi, Bluetooth (BT), near field communication (NFC) methods, etc.

The vibrator 130 generates vibrations for a feedback that is provided through a tactile sensibility. For example, the vibrator 130 may be realized as various types such as a type using a vibrator motor, a type using a piezo-electric element, a type using a resonance frequency, etc.

Only the vibrator 130 is illustrated in FIGS. 2 and 3 but it is not limited thereto. It may include elements that may provide various haptic effects such as an element that changes a temperature to transmit information through a tactile sensibility besides vibrations, an element that reduces an electrical stimulation, an element that sprays or sucks air or the like to apply a pressure, etc.

The voice output unit 150 may output various types of notification sounds or voice messages. For example, a vibration feedback may be provided to find the remote control apparatus 100, and a voice feedback may be provided together through the voice output unit 150.

The sensor 160 senses a motion manipulated by a user when the remote control apparatus 100 operates with a pointing device. For example, the sensor 160 may include an acceleration sensor, an angular speed sensor, etc. to sense an acceleration and an angular speed of a triaxis.

The storage unit 170 may store various types of modules for driving the remote control apparatus 100. The storage unit 170 may also store a plurality of vibration patterns. The remote control apparatus 100 may provide the user with a vibration pattern appropriate for several situations by using the plurality of vibration patterns stored in the storage unit 170. The providing of the plurality of vibration patterns may enable the user to intuitively estimate a situation through only a pattern of vibrations.

A power supply unit (not shown) supplies power to the remote control apparatus 100. The power supply unit secures power according to a method of exchanging a battery or a method of charging a battery by wire or wireless. When the power supplied from the power supply unit is lower or equal to a preset level, the controller 140 may control the communicator 120 to transmit a control command so as to display a notification message on the external apparatus 200. The controller 140 may also control the vibrator 130 to transmit the control command and simultaneously provide a vibration feedback.

The controller 140 controls an overall operation of the remote control apparatus 100. When a signal for notifying that a preset operation is performed is received from the external apparatus 200 through the communicator 120, the controller 140 controls the vibrator 130 to generate vibrations in response to the received signal. An operation of the controller 140 will be described in detail with reference to the attached drawings.

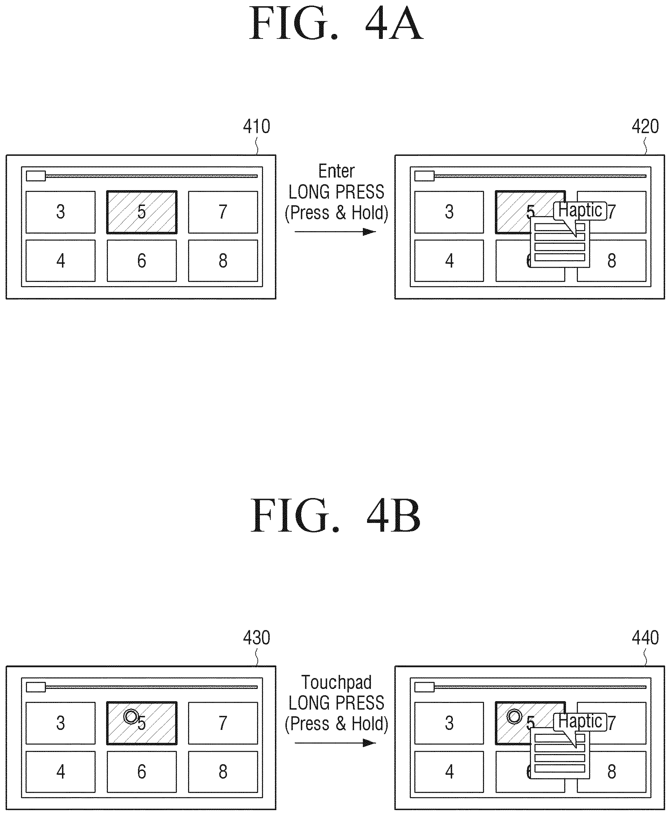

According to an exemplary embodiment of the present invention, when a long press for pressing the input unit 110 for a preset time or more is input, the controller 140 may control the communicator 120 to transmit a signal for generating a new event to the external apparatus 200. For example, as shown in FIGS. 4A and 4B, the controller 140 controls the communicator 120 to transmit a signal for generating an event for displaying a contextual menu on the external apparatus 200. FIG. 4A illustrates a button "Enter" of physical buttons of the input unit 110 that is long pressed by a user. FIG. 4B illustrates an area of a touchpad of the input unit 110 that is long pressed by the user. In two cases of FIGS. 4A and 4B, the contextual menu is popped up on a screen of the external apparatus 200 in response to long press. When a signal for notifying that the external apparatus 200 performs an operation of popping up a menu is received through the communicator 120, the controller 140 controls the vibrator 130 to generate a vibration feedback when the menu is popped up.

According to another exemplary embodiment of the present invention, when a touch input of the user is input into the input unit 110, the controller 140 controls the vibrator 130 to generate vibrations regardless of a power state of the external apparatus 200 that is an object to be controlled. A touch of the user performed on the touchpad of the input unit 110 is referred to as a touch on, and a touch of the user separating from the touchpad is referred to as touch off. When the user performs a touch on operation with holding the remote control apparatus 100, whether a touch is accurately performed may be checked. Therefore, a vibration feedback may be generated regardless of the power state of the external apparatus 200 or a display of a pointer such as a cursor.

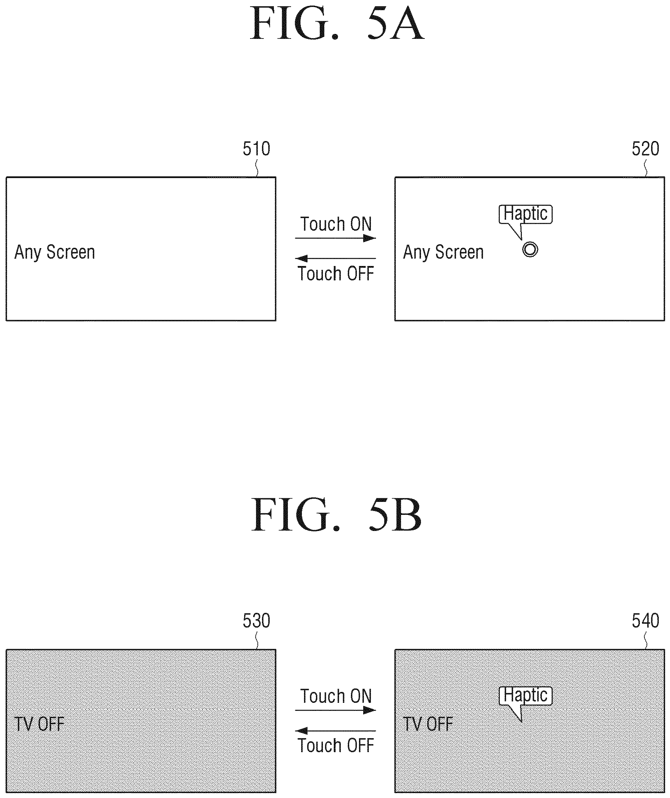

FIG. 5A illustrates a touch on that is performed when the external apparatus 200 operates. As shown in FIG. 5A, a pointer or indicator such as a cursor may be displayed on a screen 520, and a vibration feedback may be generated. However, when a viewing obstructive factor like an image content is played on the screen 520 is not generated, the controller 140 may control the vibrator 130 to provide only a vibration feedback without transmitting a control command for displaying a pointer or indicator such as a cursor. FIG. 5B illustrates a touch on that is performed when the external apparatus 200 is turned off. Since the external apparatus 200 is turned off as described above, the cursor is not displayed. The controller 140 controls the vibrator 130 to generate vibrations in response to the touch on regardless of that the external apparatus 200 is turned off.

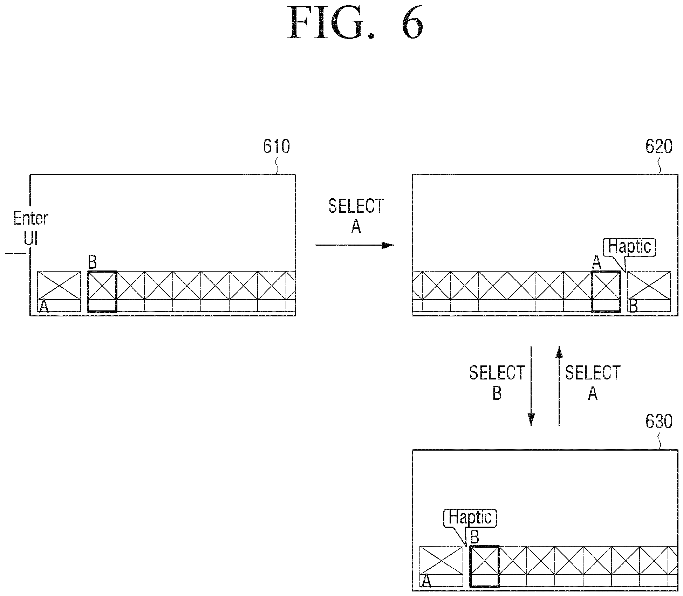

According to an exemplary embodiment of the present invention, the controller 140 controls the communicator 120 to transmit a user input, which is to change a selected item of a list having a plurality of categories displayed on the external apparatus 200, to the external apparatus 200. When a signal, which is to notify that a category of an item selected from items of the list before being changed is different from a category of an item selected from the items of the list after being changed, is received through the communicator 120, the controller 140 controls the vibrator 130 to generate vibrations. As shown in FIG. 6, an item of a list selected at an initial stage when entering a UI is an item corresponding to a category B. When a command for moving the cursor from the category B to a category A is input, the controller 140 controls the communicator 120 to transmit a control command corresponding to the external apparatus 200. When a signal for notifying that the external apparatus 200 provides a motion effect for changing a category is received through the communicator 120, the controller 140 controls the vibrator 130 to generate vibrations. A user is provided with a motion effect for unfolding items of the category A on a screen 620 of the external apparatus 200 and folding items of the category B on the screen 620 of the external apparatus 200 and provided with a vibration feedback from the remote control apparatus 100. Even when the category A is changed into the category B (620 -> 630), the controller 140 controls the vibrator 130 to provide a vibration feedback to the user.

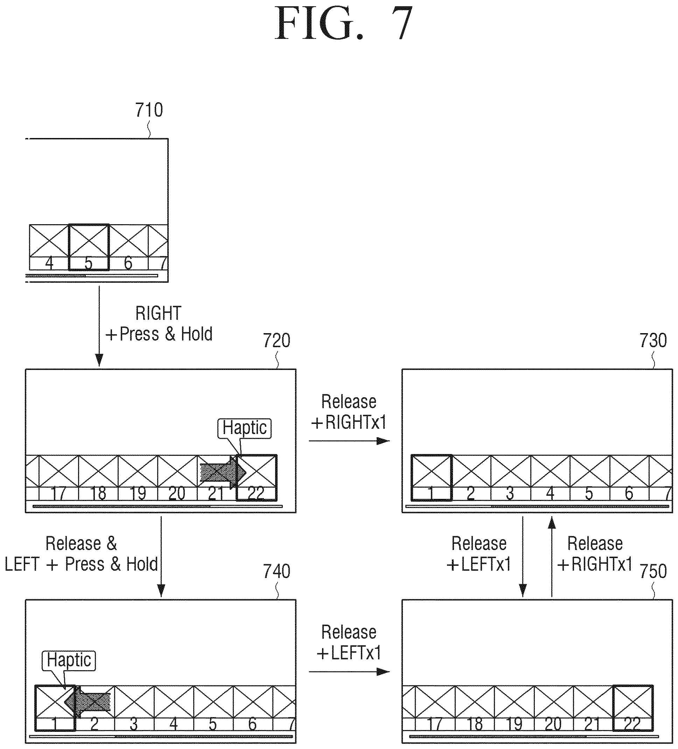

According to another exemplary embodiment of the present invention, the controller 140 controls the communicator 120 to transmit a user input, which is to change a selected item of a list displayed on the external apparatus 200 into an item adjacent to the currently selected item, to the external apparatus 200. Also, when a signal for notifying that a first or last item is selected from the list is received through the communicator 120, the controller 140 controls the vibrator 130 to generate vibrations. Referring to FIG. 7, an item 5 of a list is selected on an initial screen 710. A selected item is highlighted along an outline thereof. The selected item may be distinguished from other items through other visual effects besides highlighting processing. When a user input for pressing a first button such as a right button is received by the input unit 110, the controller 140 controls the communicator 120 to transmit a signal, which is to sequentially select items positioned on a right side of the item 5 that is a currently selected item, to the external apparatus 200. When a user input for selecting a right item is maintained, a pointer or indicator such as a cursor reaches an item 22, which is a rightmost item of the list, as on a screen 720. When a signal for notifying that a last item of the list displayed on the external apparatus 200 is selected is received through the communicator 120, the controller 140 controls the vibrator 130 to provide a vibration feedback.

When a user input for pressing a first button such as a left button is received by the input unit 110 after the user input for pressing the right button stops, the controller 140 controls the communicator 120 to transmit a signal, which is to select items positioned on a left side of the item 22 that is a currently selected item, to the external apparatus 200. When a user input for selecting a left item is maintained, for example, the user pre, the cursor reaches an item 1, which is a leftmost item of the list, as on a screen 740. When a signal for notifying that a first item of the list displayed on the external apparatus 200 is selected is received through the communicator 120, the controller 140 controls the vibrator 130 to provide a vibration feedback.

A last item and a first item of a list as shown in FIG. 7 are circularly connected to each other. Therefore, when a right button is pressed once when the item 22 is selected as on the screen 720, the item 22 is changed to select the item 1 as on the screen 730. The item 1 is selected so as to select a first item of the list. However, in this case, a vibration feedback is not provided. This is because a feedback for notifying that the cursor reaches an end of the list when the cursor moves from a last item to a first item through a list circulation does not need to be provided to the user.

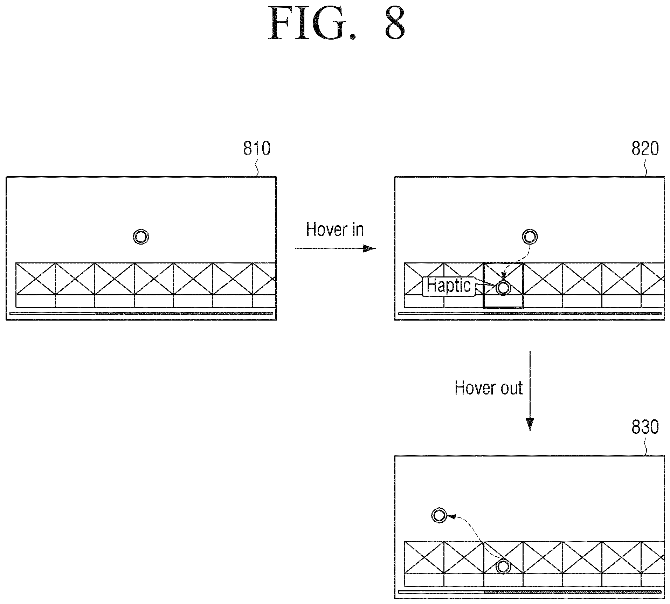

According to an exemplary embodiment of the present invention, the controller 140 controls the communicator 120 to transmit a user input for moving a pointer or indicator such as a cursor displayed on the external apparatus 200 to the external apparatus 200. A cursor is exemplarily illustrated in FIG. 8, but other types of pointers may be used. When a signal for notifying that the cursor is moved into an area of a rollover item displayed on the external apparatus 200 is received through the communicator 120, the controller 140 controls the vibrator 130 to generate vibrations. Entering the area of the rollover item is referred to as a hover in, and moving out of the area of the rollover item is referred to as hover out. As shown in FIG. 8, when the cursor hovers in in response to a user input, a corresponding item is highlighted, and a vibration feedback is provided. On the contrary, when the cursor hovers out, a vibration feedback is not provided.

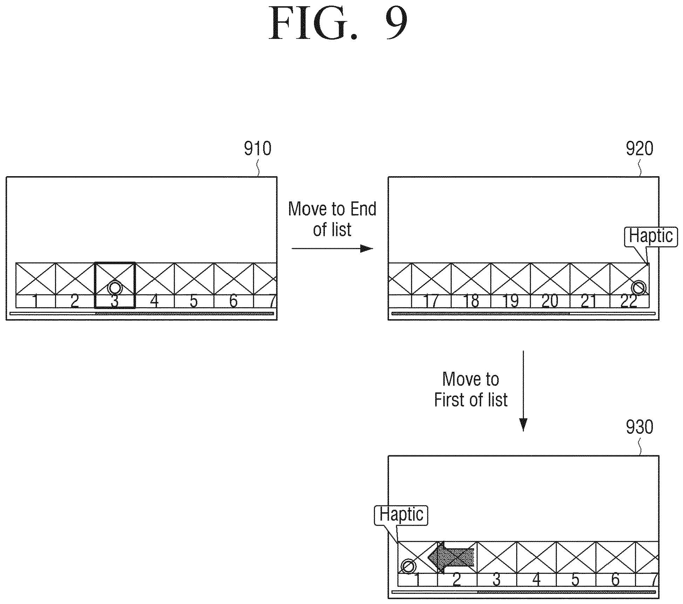

As shown in FIG. 9, when a signal, which is notify that a pointer or indicator such as a cursor hovers in to move into a rollover item and then moves onto a first or last item of the rollover item through an auto rollover scroll so as to stop scrolling, is received through the communicator 120, the controller 140 controls the vibrator 130 to generate vibrations.

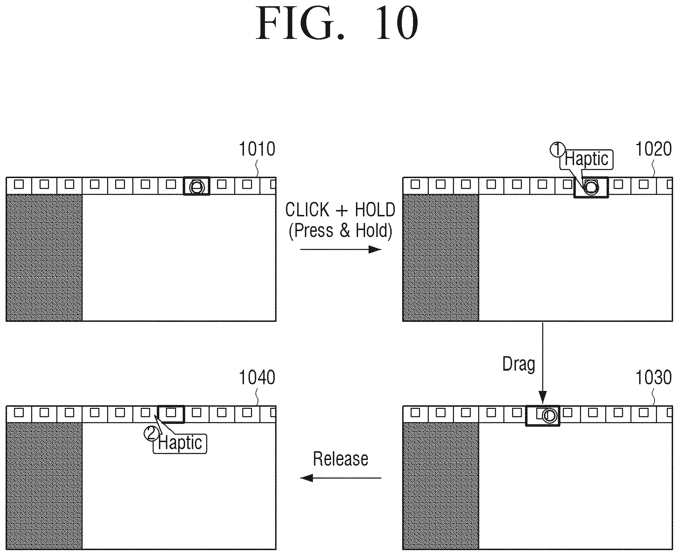

According to another exemplary embodiment of the present invention, the controller 140 may control the vibrator 130 to provide a vibration feedback when moving an item and placing the item in a new position. Referring to FIG. 10, movable items are positioned on an upper end of a screen of the external apparatus 200. When a user input (for maintaining a click operation) for moving one of the items positioned on the upper end is input into the input unit 110, the controller 140 controls the communicator 120 to transmit a controll command corresponding to the user input to the external apparatus 200. The external apparatus 200 provides a motion effect for hearing an item in response to the control command and transmits a signal for notifying that the motion effect for hearing the item is provided, to the remote control apparatus 100. When a signal is received through the communicator 120, the controller 140 controls the vibrator 130 to generate vibrations. When the heard item is put in a position to which the item is to move, a vibration feedback is repeatedly provided.

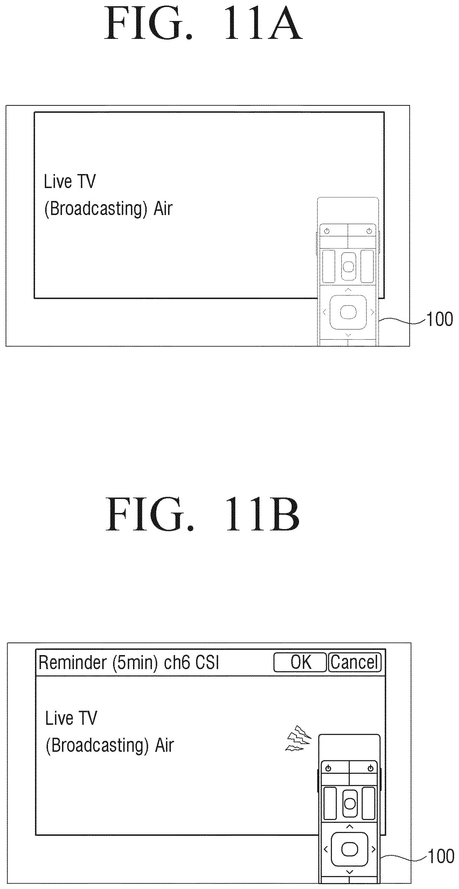

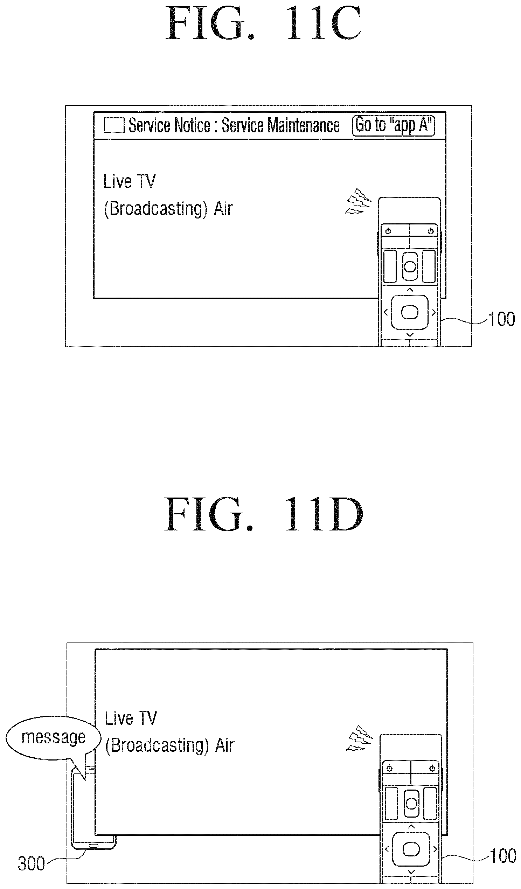

According to an exemplary embodiment, when a signal for notifying that a pop-up window showing a notification message is displayed is received through the communicator 120, the controller 140 controls the vibrator 130 to display the pop-up window and simultaneously generate vibrations. This will now be described with reference to FIGS. 11A through 11D. FIG. 11A illustrates a situation where a user views a TV before a notification message is generated. As shown in FIG. 11A, a TV broadcasting screen is displayed on a screen of the external apparatus 200, and the remote control apparatus 100 does not vibrate. FIGS. 11B through 11D illustrate different situations where a notification message is generated. FIG. 11B illustrates a situation where a notification message is generated by a system of the external apparatus 200. As shown in FIG. 11B, a reminder pop-up window for notifying 5 minutes before scheduled recording is displayed on an upper end of the external apparatus 200. Simultaneously, the remote control apparatus 100 generates a vibration feedback. FIG. 11C illustrates a situation where a notification message is generated from an application of a set 3rd party. As shown in FIG. 11C, a notification message that is generated from an application A is displayed as a pop-up window on the upper end of the external apparatus 200. Simultaneously with this, the remote control apparatus 100 generates a vibration feedback. FIG. 11D illustrates a situation where a notification message is generated in a smartphone 300 that operates with the external apparatus 200. As shown in FIG. 11D, the notification message is generated in the smartphone 300 that operates with the external apparatus 200, and thus there is no change on the screen of the external apparatus 200. However, the communicator 120 of the remote control apparatus 100 receives a signal, which is to notify that the notification message is generated in the smartphone 300, through the external apparatus 200. When the signal is received, the controller 140 controls the vibrator 130 to provide a vibration feedback.

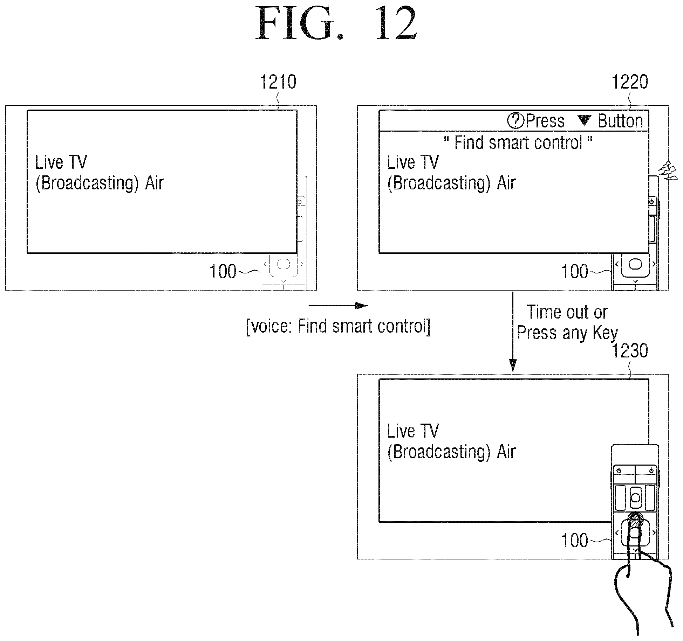

According to another exemplary embodiment of the present invention, when a user command for finding the remote control apparatus 200 is input into the external apparatus 200 through the communicator 120, the controller 140 controls the vibrator 130 to generate vibrations. When a preset time elapses or a user input is input into the input unit 110 after vibrations are generated, the controller 140 controls the vibrator 130 to stop the vibrations. As shown with reference numeral 1210 of FIG. 12, a user tries to find the remote control apparatus 100 to control an operation of the external apparatus 200. However, the remote control apparatus 200 is lost or does not exist, and thus the user fails to find the remote control apparatus 100. FIG. 12 illustrates a command that is input into the external apparatus 200 through a voice. However, the same function may be performed through pressing of a button attached onto the external apparatus 200 or through a motion recognition. As shown with reference numeral 1220 of FIG. 12, an input of a voice command of the user to find the remote control apparatus 100 is visually fed back on the screen of the external apparatus 200. When a signal for notifying that a user command for finding the remote control apparatus 100 is input into the external apparatus 200 is received through the communicator 120, the controller 140 controls the vibrator 130 to provide a vibration feedback. When a preset time elapses or the user inputs a user input into the input unit 110 of the remote control apparatus 100, the controller 140 controls the vibrator 130 to stop the vibrations as shown in reference numeral 1230. Since a case where the user input is input into the input unit 110 corresponds to a case where the user finds the remote control apparatus 100, and indefinitely generating of vibrations is inefficient, the controller 140 controls the vibrator 130 to stop providing a vibration feedback.

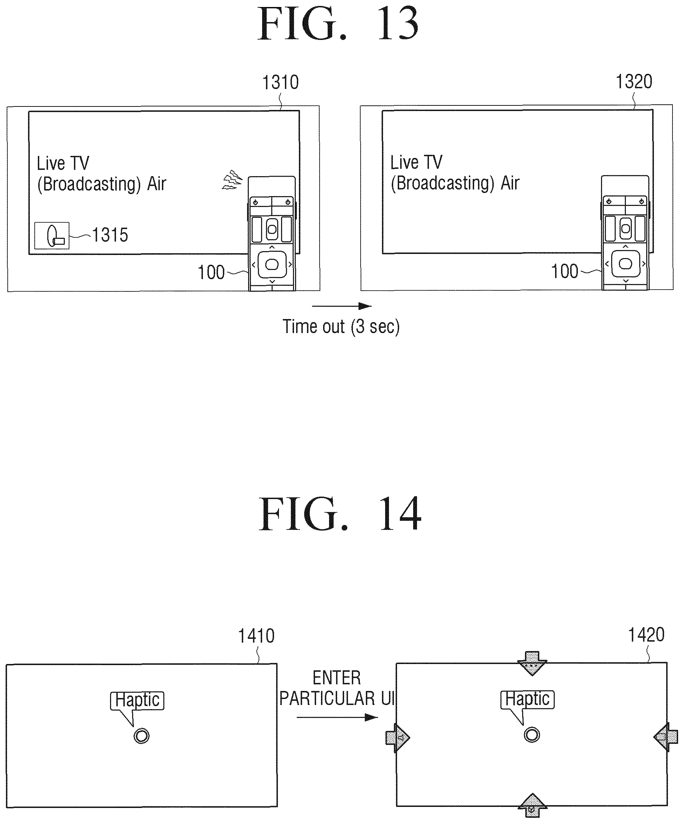

According to an exemplary embodiment of the present invention, when power of the power supply unit (not shown) is lower than or equal to a preset level, the controller 140 controls the communicator 120 to transmit a control command so as to display a notification message on the external apparatus 200. The controller 140 also controls the vibrator 130 to generate vibrations. Since the remote control apparatus 100 is supplied with power through a normal battery, the user may be pre-informed of a power state in a low battery situation. Referring to FIG. 13, when the controller 140 determines that the power of the remote control apparatus 100 is lower than or equal to the preset level, the controller 140 controls the communicator 120 to transmit a control command which is to display a pop-up window 1315 for notifying that the power of the remote control apparatus 100 lacks on the screen of the external apparatus 200. Simultaneously, the controller 140 provides a vibration feedback to inform the user of the power state. However, since power is not sufficient, the controller 140 controls the vibrator 130 to stop the vibrations when a preset time (e.g., 3 seconds) elapses as shown in FIG. 13.

According to another exemplary embodiment of the present invention, when a signal for notifying that an animation entering a particular UI is provided is received through the communicator 120, the controller 140 controls the vibrator 130 to generate vibrations. Referring to FIG. 14, vibrations are generated on a screen 1410 because a user touches a touchpad part of the input unit 110 to touch in the touchpad part. Even when a pointer or indicator such as a cursor enters the particular UI so as to provide a UI entering animation toward a central part of a screen 1420, the controller 140 provides a vibration feedback.

According to an exemplary embodiment of the present invention, the controller 140 may control the vibrator 130 to provide various types of vibration feedbacks by using a plurality of vibration patterns that respectively correspond to a preset operation and are stored in the storage unit 170. The controller 140 may provide a vibration feedback corresponding to various operations through the plurality of vibration patterns and strengths. Also, the controller 140 may control the vibrator 130 to weakly provide a strength of a vibration when power lacks in association with a power state of the power supply unit (not shown).

When an auto scroll is performed, and consecutive scroll effects occur, the controller 140 may control the vibrator 130 to generate vibrations when a preset cue is provided like a pointer or indicator such as a cursor sticks onto an edge of a screen so as to change a shape of the cursor or the like.

Through the remote control apparatus 100 as described above, a haptic feedback that is represented as a vibration may be provided to the user so as to show an effect of reinforcing a feedback effect and a notification function.

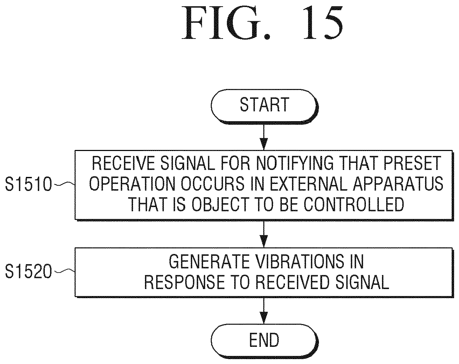

FIG. 15 is a flowchart of a method of providing a vibration feedback of the remote control apparatus 100 according to an exemplary embodiment of the present invention. Referring to FIG. 15, in operation S1510, the remote control apparatus 100 receives a signal for notifying that a preset operation is performed in an apparatus that is an object to be controlled. In operation S1520, the remote control apparatus 100 vibrates in response to the received signal to provide a haptic feedback.

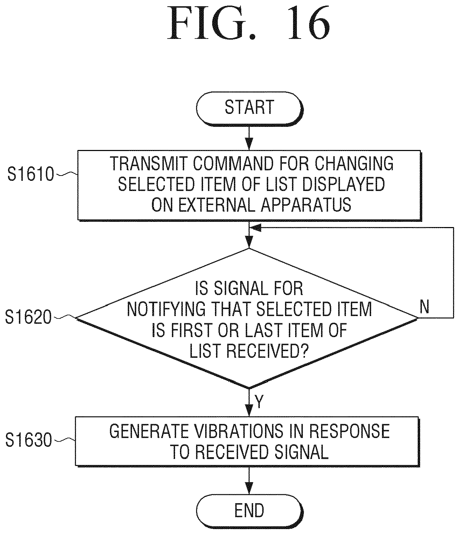

FIG. 16 is a flowchart of a method of providing a vibration feedback of the remote control apparatus 100 according to another exemplary embodiment of the present invention. Referring to FIG. 16, in operation S1610, the remote control apparatus 100 transmits a user input, which is to change a selected item of a list displayed on the external apparatus 200 into an item adjacent to a currently selected item, to the external apparatus 200. When a signal for notifying that a first or last item of the displayed list is selected is received in operation S1620, the remote control apparatus 100 generates vibrations in response to the received signal in operation S1630.

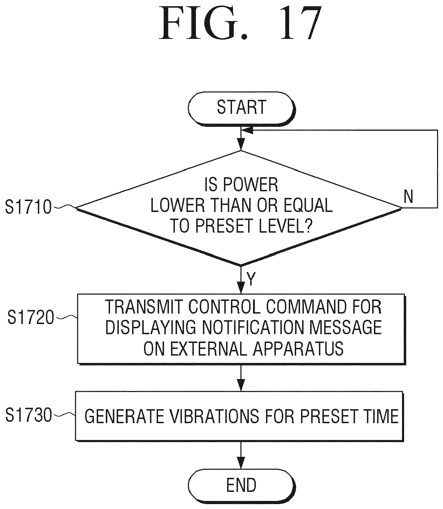

FIG. 17 is a flowchart of a method of providing a vibration feedback of the remote control apparatus 100 according to another exemplary embodiment of the present invention. Referring to FIG. 17, in operation S1710, the remote control apparatus 100 determines that power is lower than or equal to a preset level. When the power of the remote control apparatus 100 is lower than or equal to the preset level in operation S1710, the remote control apparatus 100 transmits a control command for displaying a notification message to the external apparatus 200 in operation S1720. In operation S1730, the remote control apparatus 100 generates vibrations for a preset time. Operations S1720 and S1730 may be simultaneously performed or operation S1730 may be performed before operation S1720.

According to a method of providing a vibration feedback of the remote control apparatus 100 according to another exemplary embodiment of the present invention, the remote control apparatus 100 transmits a user input for moving a pointer or indicator such as a cursor displayed on the external apparatus 200 to the external apparatus 200. Also, when a signal for notifying that the cursor is moved into an area of a rollover item displayed on the external apparatus 200 is received, the remote control apparatus 100 generates vibrations. When a signal, which is to notify that the cursor is moved into the area of the rollover item and moved onto a first or last item of the rollover item through an auto rollover scroll so as to stop scrolling, is received from the external apparatus 200, the remote control apparatus 100 repeatedly generates vibrations.

According to a method of providing a vibration feedback of the remote control apparatus 100 according to an exemplary embodiment of the present invention, the remote control apparatus 100 transmits a user input, which is to change a selected item of a list having a plurality of categories displayed on the external apparatus 200, to the external apparatus 200. When a signal for notifying that a category of an item selected from items of the list before being changed is different from a category of an item selected from the items of the list after being changed is received from the external apparatus 200, the remote control apparatus 100 generates vibrations.

According to a method of providing a vibration feedback of the remote control apparatus 100 according to another exemplary embodiment of the present invention, when a signal for notifying that a pop-up window showing a notification message is displayed on the external apparatus 200 is received, the remote control apparatus 100 displays the pop-up window and simultaneously generates vibrations.

According to a method of providing a vibration feedback of the remote control apparatus 100 according to an exemplary embodiment of the present invention, the remote control apparatus 100 stores a plurality of vibration patterns respectively corresponding to a preset operation. Information about patterns, strengths, etc. may be updated. The remote control apparatus 100 generates vibrations in a pattern corresponding to a received preset operation among the plurality of vibration patterns that are stored.

According to a method of providing a vibration feedback of the remote control apparatus 100 according to another exemplary embodiment of the present invention, when a signal for notifying that a user input for finding the remote control apparatus 100 is input is received, the remote control apparatus 100 generates vibrations. When a preset time elapses or a user input is received by the remote control apparatus 100 after vibrations are generated, the remote control apparatus 100 stops vibrations to prevent unnecessary power consumption.

Also, a program code for performing a method of providing vibrations according to various exemplary embodiments as described above may be stored on various types of recording media. In detail, the program code may be stored on various types of non-transitory computer-readable recording media such as a random access memory (RAM), a flash memory, a read only memory (ROM), an erasable programmable ROM (EPROM), an electronically erasable and programmable ROM (EEPROM), a register, a hard disc, a removable disc, a memory card, a universal serial bus (USB) memory, a CD-ROM, Blu-Rays, and etc.

The foregoing exemplary embodiments and advantages are merely exemplary and are not to be construed as limiting the present invention. The present teaching can be readily applied to other types of apparatuses. Also, the description of the exemplary embodiments of the present disclosure is intended to be illustrative, and not to limit the scope of the claims, and many alternatives, modifications, and variations will be apparent to those skilled in the art.

## Claims

1. A remote control apparatus (100) comprising:
an input unit (110) configured to receive a user input;
a communicator (120) configured to communicate with an external apparatus (200) that is an object to be controlled;
a vibrator (130) configured to generate vibrations; and
a controller (140) configured to control the vibrator to generate vibrations in response to a received signal for notifying that a preset operation is performed from the external apparatus through the communicator,
**characterised in that** the controller is configured to control the communicator to transmit a user input, which is to change a selected item of a list having a plurality of categories displayed on the external apparatus, to the external apparatus and, in response to a signal for notifying that a category of an item selected from items of the list before being changed is different from a category of an item selected from the items of the list after being changed, being received through the communicator, is configured to control the vibrator to generate vibrations.

2. The remote control apparatus of claim 1, wherein the controller is configured to control the communicator to transmit a user input, which is to change a selected item of a list displayed on the external apparatus into an item adjacent to a currently selected item, to the external apparatus and, in response to a signal for notifying that a first or last item of the displayed list is selected, being received through the communicator, is configured to control the vibrator to generate vibrations.

3. The remote control apparatus of claim 1 or claim 2, wherein the controller is configured to control the communicator to transmit a user input, which is to move a pointer displayed on the external apparatus, to the external apparatus and, in response to a signal for notifying that the pointer is moved into an area of a rollover item displayed on the external apparatus, being received through the communicator, is configured to control the vibrator to generate vibrations.

4. The remote control apparatus of claim 3, wherein in response to a signal for notifying that the pointer is moved into the area of the rollover item and moved onto a first or last item of the rollover item through an auto rollover scroll so as to stop scrolling, being received through the communicator, the controller is configured to control the vibrator to generate vibrations.

5. The remote control apparatus of any one of the preceding claims, wherein in response to a signal for notifying that a pop-up window showing a notification message is displayed on the external apparatus, being received through the communicator, the controller is configured to control the vibrator to display the pop-up window and simultaneously generate vibrations.

6. The remote control apparatus of any one of the preceding claims, further comprising:
a storage unit (170) configured to store a plurality of vibration patterns respectively corresponding to the preset operation,
wherein the controller is configured to control the vibrator to generate vibrations in a pattern corresponding to the received preset operation among the plurality of vibration patterns according to the received preset operation.

7. The remote control apparatus of any one of the preceding claims, further comprising:
a power supply unit configured to supply power to the remote control apparatus, wherein in response to the power of the power supply unit being lower than or equal to a preset level, the controller is configured to control the communicator to transmit a control command for displaying a notification message on the external apparatus and to control the vibrator to generate vibrations.

8. The remote control apparatus of any one of the preceding claims, wherein the controller is configured to control the vibrator to generate vibrations in response to a signal for notifying that a user input for finding the remote control apparatus is input into the external apparatus, being received through the communicator and to control the vibrator to stop the vibrations in response to a preset time elapsing or a user input being input into the input unit after generating the vibrations.

9. The remote control apparatus of any one of the preceding claims, wherein in response to a touch input of a user being input into the input unit, the controller is configured to control the vibrator to generate vibrations regardless of a power state of the external apparatus that is the object to be controlled.

10. A method of providing a vibration feedback of a remote control apparatus (100), the method comprising:
receiving a signal for notifying that a preset operation is performed in an external apparatus (200) controlled by the remote control apparatus;
generating vibrations in response to the received signal for notifying that the preset operations is performed; and **characterised by**
transmitting a user input, which is to change a selected item of a list having a plurality of categories displayed on the external apparatus, to the external apparatus,
wherein in response to a signal for notifying that a category of an item selected from items of the list before being changed is different from a category of an item selected from the items of the list after being changed, being received, the vibrations are generated.

11. The method of claim 10, further comprising:
transmitting a user input, which is to change a selected item of a list displayed on the external apparatus into an item adjacent to a currently selected item, to the external apparatus,
wherein in response to a signal for notifying that a first or last item of the displayed list is selected, being received, the vibrations are generated.

12. The method of claim 10 or claim 11, further comprising:
transmitting a user input for moving a pointer displayed on the external apparatus, to the external apparatus,
wherein in response to a signal for notifying that the pointer is moved into an area of a rollover item displayed on the external apparatus, being received, the vibrations are generated.

13. The method of claim 12, wherein in response to a signal for notifying that the pointer is moved into the area of the rollover item and moved onto a first or last item of the rollover item through an auto rollover scroll so as to stop scrolling, being received, the vibrations are repeatedly generated.

## Patentansprüche

1. Fernsteuerungsvorrichtung (100), die Folgendes umfasst:
eine Eingabeeinheit (110), die dazu konfiguriert ist, eine Benutzereingabe zu empfangen;
eine Kommunikationseinrichtung (120), die dazu konfiguriert ist, mit einer externen Vorrichtung (200), bei der es sich um ein zu steuerndes Objekt handelt, zu kommunizieren;
einen Vibrator (130), der dazu konfiguriert ist, Vibrationen zu erzeugen; und
einen Kontroller (140), der dazu konfiguriert ist, den Vibrator dazu zu steuern, als Reaktion darauf, dass ein Signal zum Melden, dass ein voreingestellter Vorgang ausgeführt ist, von der externen Vorrichtung her über die Kommunikationseinrichtung empfangen wird, Vibrationen zu erzeugen,
**dadurch gekennzeichnet, dass** der Kontroller dazu konfiguriert ist, die Kommunikationseinrichtung dazu zu steuern, eine Benutzereingabe, die einen ausgewählten Artikel einer auf der externen Vorrichtung angezeigten Liste mit einer Vielzahl von Kategorien ändern soll, an die externe Vorrichtung zu übertragen und als Reaktion darauf, dass ein Signal zum Melden, dass eine Kategorie eines aus Artikeln der Liste ausgewählten Artikels, bevor sie geändert wurde, eine andere ist als eine Kategorie eines aus den Artikeln der Liste ausgewählten Artikels, nachdem sie geändert wurde, über die Kommunikationseinrichtung empfangen wurde, dazu konfiguriert ist, den Vibrator dazu zu steuern, Vibrationen zu erzeugen.

2. Fernsteuerungsvorrichtung nach Anspruch 1, wobei der Kontroller dazu konfiguriert ist, die Kommunikationseinrichtung dazu zu steuern, eine Benutzereingabe, die einen ausgewählten Artikel einer auf der externen Vorrichtung angezeigten Liste zu einem Artikel neben einem aktuell ausgewählten Artikel ändern soll, an die externe Vorrichtung zu übertragen und als Reaktion darauf, dass ein Signal zum Melden, dass ein erster oder ein letzter Artikel der angezeigten Liste ausgewählt ist, über die Kommunikationseinrichtung empfangen wird, dazu konfiguriert ist, den Vibrator dazu zu steuern, Vibrationen zu erzeugen.

3. Fernsteuerungsvorrichtung nach Anspruch 1 oder Anspruch 2, wobei der Kontroller dazu konfiguriert ist, die Kommunikationseinrichtung dazu zu steuern, eine Benutzereingabe, die einen auf der externen Vorrichtung angezeigten Zeiger verschieben soll, an die externe Vorrichtung zu übertragen und als Reaktion darauf, dass ein Signal zum Melden, dass der Zeiger in einen auf der externen Vorrichtung angezeigten Bereich eines Rollover-Artikels verschoben ist, über die Kommunikationseinrichtung empfangen wird, dazu konfiguriert ist, den Vibrator dazu zu steuern, Vibrationen zu erzeugen.

4. Fernsteuerungsvorrichtung nach Anspruch 3, wobei als Reaktion darauf, dass ein Signal zum Melden, dass der Zeiger in den Bereich des Rollover-Artikels verschoben ist und über einen Auto-Rollover-Scroll auf einen ersten oder einen letzten Artikel des Rollover-Artikels verschoben ist, sodass das Scrollen aufhört, über die Kommunikationseinrichtung empfangen wird, der Kontroller dazu konfiguriert ist, den Vibrator dazu zu steuern, Vibrationen zu erzeugen.

5. Fernsteuerungsvorrichtung nach einem der vorangehenden Ansprüche, wobei als Reaktion darauf, dass ein Signal zum Melden, dass ein eine Meldungsnachricht zeigendes Pop-up-Fenster auf der externen Vorrichtung angezeigt wird, über die Kommunikationseinrichtung empfangen wird, der Kontroller dazu konfiguriert ist den Vibrator dazu zu steuern, das Pop-up-Fenster anzuzeigen und gleichzeitig Vibrationen zu erzeugen.

6. Fernsteuerungsvorrichtung nach einem der vorangehenden Ansprüche, die weiter Folgendes umfasst:
eine Speichereinheit (170), die dazu konfiguriert ist, eine Vielzahl von Vibrationsmustern, die jeweils dem voreingestellten Vorgang entsprechen, zu speichern,
wobei der Kontroller dazu konfiguriert ist, den Vibrator dazu zu steuern, gemäß dem empfangenen voreingestellten Vorgang Vibrationen in einem dem empfangenen voreingestellten Vorgang entsprechenden Muster aus der Vielzahl von Vibrationsmustern zu erzeugen.

7. Fernsteuerungsvorrichtung nach einem der vorangehenden Ansprüche, die weiter Folgendes umfasst:
eine Leistungsversorgungseinheit, das dazu konfiguriert ist, die Fernsteuerungsvorrichtung mit Leistung zu versorgen, wobei als Reaktion darauf, dass die Leistung der Leistungsversorgungseinheit niedriger als oder gleich einem voreingestellten Pegel ist, der Kontroller dazu konfiguriert ist, die Kommunikationseinrichtung dazu zu steuern, einen Steuerbefehl zum Anzeigen einer Meldungsnachricht auf der externen Vorrichtung zu übertragen und den Vibrator dazu zu steuern, Vibrationen zu erzeugen.

8. Fernsteuerungsvorrichtung nach einem der vorangehenden Ansprüche, wobei der Kontroller dazu konfiguriert ist, den Vibrator dazu zu steuern, als Reaktion darauf, dass ein Signal zum Melden, dass eine Benutzereingabe zum Auffinden der Fernsteuerungsvorrichtung in die externe Vorrichtung eingegeben wird, über die Kommunikationseinrichtung empfangen wird, Vibrationen zu erzeugen und den Vibrator dazu zu steuern, als Reaktion darauf, dass nach den Erzeugen der Vibrationen eine voreingestellte Zeit abläuft oder eine Benutzereingabe in die Eingabeeinheit eingegeben wird, die Vibrationen zu beenden.

9. Fernsteuerungsvorrichtung nach einem der vorangehenden Ansprüche, wobei als Reaktion darauf, dass eine Berührungseingabe eines Benutzers in die Eingabeeinheit eingegeben wird, der Kontroller dazu konfiguriert ist, ungeachtet eines Leistungszustands der externen Vorrichtung, bei der es sich um das zu steuernde Objekt handelt, den Vibrator dazu zu steuern, Vibrationen zu erzeugen.

10. Verfahren zum Bereitstellen einer Vibrationsrückmeldung einer Fernsteuerungsvorrichtung (100), wobei das Verfahren Folgendes umfasst:
Empfangen eines Signals zum Melden, dass ein voreingestellter Vorgang in einer von der Fernsteuerungsvorrichtung gesteuerten externen Vorrichtung (200) ausgeführt ist;
Erzeugen von Vibrationen als Reaktion auf das empfangene Signal zum Melden, dass der voreingestellte Vorgang ausgeführt ist; und **gekennzeichnet durch**
Übertragen einer Benutzereingabe, die einen ausgewählten Artikel einer auf der externen Vorrichtung angezeigten Liste mit einer Vielzahl von Kategorien ändern soll, an die externe Vorrichtung,
wobei als Reaktion darauf, dass ein Signal zum Melden, dass eine Kategorie eines aus Artikeln der Liste ausgewählten Artikels, bevor sie geändert wurde, eine andere ist als eine Kategorie eines aus den Artikeln der Liste ausgewählten Artikels, nachdem sie geändert wurde, empfangen wird, die Vibrationen erzeugt werden.

11. Verfahren nach Anspruch 10, das weiter Folgendes umfasst:
Übertragen einer Benutzereingabe, die einen ausgewählten Artikel einer auf der externen Vorrichtung angezeigten Liste zu einem Artikel neben einem aktuell ausgewählten Artikel ändern soll, an die externe Vorrichtung,
wobei als Reaktion darauf, dass ein Signal zum Melden, dass ein erster oder letzter Artikel der angezeigten Liste ausgewählt ist, empfangen wird, die Vibrationen erzeugt werden.

12. Verfahren nach Anspruch 10 oder Anspruch 11, das weiter Folgendes umfasst:
Übertragen einer Benutzereingabe zum Verschieben eines auf der externen Vorrichtung angezeigten Zeigers an die externe Vorrichtung,
wobei als Reaktion darauf, dass ein Signal zum Melden, dass der Zeiger in einen Bereich eines auf der externen Vorrichtung angezeigten Rollover-Artikels verschoben ist, empfangen wird, die Vibrationen erzeugt werden.

13. Verfahren nach Anspruch 12, wobei als Reaktion darauf, dass ein Signal zum Melden, dass der Zeiger in den Bereich des Rollover-Artikels verschoben ist und über einen Auto-Rollover-Scroll auf einen ersten oder einen letzten Artikel des Rollover-Artikels verschoben ist, sodass das Scrollen aufhört, empfangen wird, die Vibrationen wiederholt erzeugt werden.

## Revendications

1. Appareil de commande à distance (100) comprenant :
un module d'entrée (110) configuré pour recevoir une entrée d'utilisateur ;
un communicateur (120) configuré pour communiquer avec un appareil externe (200) qui est un objet à commander ;
un vibrateur (130) configuré pour générer des vibrations ; et
un contrôleur (140) configuré pour commander le vibrateur pour qu'il génère des vibrations en réponse à un signal reçu pour notifier qu'une opération prédéfinie est réalisée depuis l'appareil externe par le biais du communicateur,
**caractérisé en ce que** le contrôleur est configuré pour commander le communicateur pour qu'il transmette une entrée d'utilisateur, qui est de changer un élément sélectionné d'une liste ayant une pluralité de catégories affichée sur l'appareil externe, à l'appareil externe et, en réponse à un signal pour notifier qu'une catégorie d'un élément sélectionné parmi des éléments de la liste avant qu'elle soit changée est différente d'une catégorie d'un élément sélectionné parmi les éléments de la liste après qu'elle a été changée, lequel signal est reçu par le biais du communicateur, est configuré pour commander le vibrateur pour qu'il génère des vibrations.

2. Appareil de commande à distance selon la revendication 1, dans lequel le contrôleur est configuré pour commander le communicateur pour qu'il transmette une entrée d'utilisateur, qui est de changer un élément sélectionné d'une liste affichée sur l'appareil externe en un élément adjacent à un élément actuellement sélectionné, à l'appareil externe et, en réponse à un signal pour notifier qu'un premier ou un dernier élément de la liste affichée est sélectionné, lequel signal est reçu par le biais du communicateur, est configuré pour commander le vibrateur pour qu'il génère des vibrations.

3. Appareil de commande à distance selon la revendication 1 ou la revendication 2, dans lequel le contrôleur est configuré pour commander le communicateur pour qu'il transmette une entrée d'utilisateur, qui est de déplacer un pointeur affiché sur l'appareil externe, à l'appareil externe et, en réponse à un signal pour notifier que le pointeur est déplacé dans une zone d'un élément de rollover affiché sur l'appareil externe, lequel signal est reçu par le biais du communicateur, est configuré pour commander le vibrateur pour qu'il génère des vibrations.

4. Appareil de commande à distance selon la revendication 3, dans lequel, en réponse à un signal pour notifier que le pointeur est déplacé dans la zone de l'élément de rollover et déplacé sur un premier ou un dernier élément de l'élément de rollover par le biais d'un défilement rollover automatique afin de stopper le défilement, lequel signal est reçu par le biais du communicateur, le contrôleur est configuré pour commander le vibrateur pour qu'il génère des vibrations.

5. Appareil de commande à distance selon l'une quelconque des revendications précédentes, dans lequel, en réponse à un signal pour notifier qu'une fenêtre contextuelle montrant un message de notification est affichée sur l'appareil externe, lequel signal est reçu par le biais du communicateur, le contrôleur est configuré pour commander le vibrateur pour qu'il affiche la fenêtre contextuelle et qu'il génère simultanément des vibrations.

6. Appareil de commande à distance selon l'une quelconque des revendications précédentes, comprenant en outre :
un module de stockage (170) configuré pour stocker une pluralité de modèles de vibration correspondant respectivement à l'opération prédéfinie,
dans lequel le contrôleur est configuré pour commander le vibrateur pour qu'il génère des vibrations selon un modèle correspondant à l'opération prédéfinie reçue parmi la pluralité de modèles de vibration en fonction de l'opération prédéfinie reçue.

7. Appareil de commande à distance selon l'une quelconque des revendications précédentes, comprenant en outre :
un module d'alimentation en énergie configuré pour fournir de l'énergie à l'appareil de commande à distance, dans lequel, en réponse au fait que l'énergie du module d'alimentation en énergie est inférieure ou égale à un niveau prédéfini, le contrôleur est configuré pour commander le communicateur pour qu'il transmette une instruction de commande pour afficher un message de notification sur l'appareil externe, et pour commander le vibrateur pour qu'il génère des vibrations.

8. Appareil de commande à distance selon l'une quelconque des revendications précédentes, dans lequel le contrôleur est configuré pour commander le vibrateur pour qu'il génère des vibrations en réponse à un signal pour notifier qu'une entrée d'utilisateur pour trouver l'appareil de commande à distance est entrée dans l'appareil externe, lequel signal est reçu par le biais du communicateur, et pour commander le vibrateur pour qu'il stoppe les vibrations en réponse à l'écoulement d'une durée prédéfinie ou à l'entrée d'une entrée d'utilisateur dans le module d'entrée après avoir généré les vibrations.

9. Appareil de commande à distance selon l'une quelconque des revendications précédentes, dans lequel, en réponse à l'entrée d'une entrée tactile d'un utilisateur dans le module d'entrée, le contrôleur est configuré pour commander le vibrateur pour qu'il génère des vibrations quel que soit l'état d'énergie de l'appareil externe qui est l'objet à commander.

10. Procédé de fourniture d'une rétroaction de vibrations d'un appareil de commande à distance (100), le procédé comprenant :
la réception d'un signal pour notifier qu'une opération prédéfinie est réalisée dans un appareil externe (200) commandé par l'appareil de commande à distance ;
la génération de vibrations en réponse au signal reçu pour notifier que l'opération prédéfinie est réalisée ; et **caractérisé par**
la transmission d'une entrée d'utilisateur, qui est de changer un élément sélectionné d'une liste ayant une pluralité de catégories affichée sur l'appareil externe, à l'appareil externe, dans lequel, en réponse à la réception d'un signal pour notifier qu'une catégorie d'un élément sélectionné parmi des éléments de la liste avant qu'elle soit changée est différente d'une catégorie d'un élément sélectionné parmi les éléments de la liste après qu'elle a été changée, les vibrations sont générées.

11. Procédé selon la revendication 10, comprenant en outre :
la transmission d'une entrée d'utilisateur, qui est de changer un élément sélectionné d'une liste affichée sur l'appareil externe en un élément adjacent à un élément actuellement sélectionné, à l'appareil externe,
dans lequel, en réponse à la réception d'un signal pour notifier qu'un premier ou un dernier élément de la liste affichée est sélectionné, les vibrations sont générées.

12. Procédé selon la revendication 10 ou la revendication 11, comprenant en outre :
la transmission à l'appareil externe d'une entrée d'utilisateur pour déplacer un pointeur affiché sur l'appareil externe,
dans lequel, en réponse à la réception d'un signal pour notifier que le pointeur est déplacé dans une zone d'un élément de rollover affiché sur l'appareil externe, les vibrations sont générées.

13. Procédé selon la revendication 12, dans lequel, en réponse à la réception d'un signal pour notifier que le pointeur est déplacé dans la zone de l'élément de rollover et déplacé sur un premier ou un dernier élément de l'élément de rollover par un défilement rollover automatique afin de stopper le défilement, les vibrations sont générées de manière répétée.
